# EUROPEAN PATENT APPLICATION

(11) **EP 4 706 946 A1**
(43) Date of publication of application: **11.03.2026**
(21) Application number: 24198330.3
(22) Date of filing: 04.09.2024
(51) Int. Cl.: B29C 70/44, B29C 70/54, B29C 70/56, B29D 99/00, F03D 1/06, B29L 31/08

(54) **METHOD OF MANUFACTURING A HALF SHELL AS WELL AS WIND TURBINE ROTOR BLADE**

(71) Applicant: Nordex Energy SE & Co. KG, 22419 Hamburg (DE); Nordex Blade Technology Centre ApS, 5771 Stenstrup (DK)
(72) Inventor: Soerensen, Flemming, 5771 Stenstrup (DK); Machalica, Stefan, 22419 Hamburg (DE); Raschen, Tobias, 22419 Hamburg (DE); Hubald, Mathias, 22419 Hamburg (DE)
(74) Representative: Völkl Siebenson Patentanwälte - Partnerschaft mbB

(57) **Abstract**

The invention concerns a method of manufacturing a half shell (134) of a wind turbine rotor blade (110), the method comprising the steps:
- providing a mould (148),
- arranging an outer shell laminate (150) into the mould (148),
- arranging a three spar caps (138, 140, 142) onto the outer shell laminate (150), wherein
-- the second spar cap (140) is arranged between the first spar cap (138) and the third spar cap (142),
-- the third spar cap (142) is positioned at an outermost trailing edge (144), and

core elements (154) are arranged between the first spar cap (138) and the second spar cap (140) and/or between the second spar cap (140) and the third spar cap (142) and/or between the first spar cap (138) and the third spar cap (142), wherein at least one of the core elements (154) is a tolerance compensation element (156) that comprises a wedge-formed portion (158) and interacts in a form-fit manner with a corresponding counter wedge-formed portion (160).

The invention also refers to a wind turbine rotor blade (110) .

## Description

The invention concerns a method of manufacturing a half shell of a wind turbine rotor blade. Further, the invention concerns a wind turbine rotor blade having such a half shell.

Wind turbines with wind turbine rotor blades are widely known from the state of the art and are used to convert wind energy into electrical energy. Wind turbine rotor blades are usually manufactured in a shell design and comprise several components made of fiber reinforced laminate, like the aerodynamic shell. Typically, in a first step half shells are produced from many layers of a fiber composite material, into which support structures such as spar caps are inserted. In a second step, after production and curing in their half-shell molds, the half-shells are placed on top of each other and bonded together for producing the wind turbine rotor blade. The half-shells and thus the finally produced wind turbine rotor blade may be segmented for manufacturing a so-called split or segmented wind turbine rotor blade.

The half-shells typically are interconnected inside the rotor blade by one or more (shear) webs running in the longitudinal direction of the rotor blade, which connect the spar caps of the half-shells. These webs absorb forces between the half-shells, especially during operation, and thus stabilize the aerodynamic shape of the rotor blade during operation.

A challenge during production of a half-shell is the positioning, i.e. the alignment, of the spar caps and core material (foam material or other filler material, e.g. balsa wood). Particularly, the positioning of the spar caps and core material is not repeatably possible for each wind turbine rotor blade. Since there are high requirements on tolerances and only little gaps between core material and spar caps are allowed, the positioning is time consuming and needs many manual adjustments like refining of the used core material.

One task underlying the invention is to provide a method to manufacture a half-shell which contributes to a reliable and efficient process.

This object is solved by the independent claim. Advantageous embodiments are given in the sub-claims.

According to a first aspect, a method of manufacturing a half shell of a wind turbine rotor blade is disclosed. The method comprises the following steps:
- providing a mould,
- arranging an outer shell laminate into the mould,
- arranging a first spar cap onto the outer shell laminate,
- arranging a second spar cap onto the outer shell laminate, and
- arranging a third spar cap onto the outer shell laminate.
Thereby, the second spar cap is arranged between the first spar cap and the third spar cap. The third spar cap is positioned at the trailing edge. Core elements are arranged between the first spar cap and the second spar cap and/or between the second spar cap and the third spar cap and/or between the first spar cap and the third spar cap. At least one of the core elements is a tolerance compensation element that comprises a wedge-formed portion and interacts in a form-fit manner with a corresponding counter wedge-formed portion.

The described method addresses the manufacture of a half-shell, which comprises at least three spar caps, wherein at least one spar cap runs along the trailing edge of the wind turbine rotor blade. The spar caps need to be placed at a predetermined position within the mold. In other words, the position of the spar caps, at least of the first and the third spar cap, is fixed due to structural reasons. Between and/or around the spar caps, core elements are arranged within the mold, which are laid adjacent to each other and/or to the spar caps in a form fitting way. However, the core elements typically may not perfectly fit between each other and/or between the spar caps, for example due to manufacturing tolerances or due to misalignments of the spar caps. According to the invention, at least one core element comprises a wedge-formed portion which overlaps the counter wedge-formed portion, the latter being either part of a spar cap or of a separate core element. Due to the wedge-formed shape, these wedge-formed portions can slightly slide on each other to provide a tolerance compensation during the placement of the core elements, i.e. the positioning or alignment, in the mould for the half-shell. Thus, without (manual) cutting one or more core elements for a perfect form fit, the wedge-formed portions allow for a slight relative movement between the interacting elements.

After the arrangement of at least the core elements and spar caps, further steps may take place which are not described in detail herein. For example, an inner laminate (top laminate) can be arranged to cover the core elements and spar caps. After that, a vacuum resin infusion process takes place.

Finally, a step of curing the half-shell takes place to finally manufacture the half shell.

The inventive method provides several effects and advantages. Generally, the inventive method enables a flexible solution for core elements to close gaps between the core elements and the spar caps. No rather "vertical" gaps between core elements and/or spar caps occur, which later in the manufacturing process would be filled with resin only. The method allows to fulfil the required layup (i.e. positioning) tolerances without the effort of cutting one or more core panels to a desired shape in order to fit with the adjacent core elements and/or spar caps. Thus, a cycle time for manufacturing a half-shell is improved.

The spar caps are, for example, prefabs, which are placed as a whole into the mould.

The third spar cap is arranged at the trailing edge. This means that the third spar caps forms the trailing edge or runs close to the trailing edge. For example, the third spar cap is arranged at an outermost position along the trailing edge. The position of the third spar cap is fixed. It cannot be moved further towards the trailing edge or towards the leading edge. This results in the tolerance problems discussed in the above description.

The core elements are, for example, polymer foam elements. The core elements comprises a panel-like structure and may be slightly curved to adopt to the form of the mould and thus the final design of the wind turbine rotor blade.

According to an embodiment, the wedge-formed portion of the tolerance compensation element and the counter wedge-formed portion are in contact and form an inclined sliding plane. This contributes to an easy tolerance compensation, wherein by defining an angle of inclination, a grade of tolerance compensation can thus be determined. Further, an area of the overlapping region (region in which the wedge-formed portions interact) can be set. For example, both wedge-formed portions are in direct contact or contact each other via one or more, particularly thin, intermediate layers. The intermediate layers are therefore placed between the two wedge-formed portions. The one or more intermediate layers are fiber layers, in particular glass fiber layers, which are infused with resin and cured during the manufacturing of the half shell.

According to an embodiment, a ratio of a length of the wedge-formed portion of the tolerance compensation element to a thickness of the wedge-formed portion of the tolerance compensation element is at least 5:1 or more. In other words, an acute angle to the surface of the mold is approx. 11.3 degrees or more, for example. This contributes to the above-mentioned effects and advantages. The length is defined along a chordwise direction between a leading edge and a trailing edge of the wind turbine rotor blade. For example, the angle at the tip of the wedge is calculated as follows: arctan (1/5). In other words, the wedge-formed portion and thus the counter wedge-formed portion is shafted according to a ratio of 1:5 or less.

According to an embodiment, a ratio of a length of the counter wedge-formed portion to a thickness of the counter wedge-formed portion is at least 5:1 or more. The above said similarly applies.

According to an embodiment, the length to thickness ratio of the wedge-formed portion of the tolerance compensation element corresponds to the length to thickness ratio of the counter wedge-formed portion. This ensures an ideal transition between the interacting elements comprising the wedge-formed portion and the counter wedge-formed portion.

According to an embodiment, the counter wedge-formed portion has a thickness which corresponds to the thickness of the wedge-formed portion of the tolerance compensation element. This ensures an ideal transition between the interacting elements comprising the wedge-formed portion and the counter wedge-formed portion. This enables that the inner and/or outer surface of the half shell in the region of both wedge-formed portions is nearly flush after the manufacturing.

According to an embodiment, after a step of vacuum resin infusion of the half-shell, the wedge-formed portion and the counter wedge-formed portion are flush with each other on a top side and a bottom side. This contributes to the above-mentioned effects and advantages.

According to an embodiment, the two wedge-formed portions project beyond each other on a top side and a bottom side of the core elements. In this configuration, the two wedge-formed portions are slight moved towards each other for the tolerance compensation. Due to the long chamfer of the wedge-formed portions the outer surface in the overlap area is nevertheless even and does not show big bulges or the like, especially after the curing process of the resin.

According to an embodiment, the two wedge-formed portions are set back from each other with respect to a flush arrangement on a top side and a bottom side. In this configuration, the two wedge-formed portions are slightly moved away from each other for the tolerance compensation. However, the both wedge-shaped portions of the core elements still overlap each other for at least 70 percent, preferably 80 and most preferably 95%.

According to an embodiment, the counter wedge-formed portion is part of a separate counter core element, the counter core element being arranged between the tolerance compensation element and a respective spar cap. This allows the overlapping area to be placed anywhere between the two respective spar caps, for example in the middle between two corresponding spar caps.

According to an embodiment, the counter wedge-formed portion is part of a counter core element, the counter core element being integrally formed with a respective spar cap. This enables that the counter wedge-formed portion is inserted into the mold when the spar cap is inserted.

According to an embodiment, one of the spar caps is shaped as the counter wedge-formed portion, which faces an adjacent spar cap. Thus, no further core element with the counter wedge-formed portion must be placed into the mold.

According to a further aspect, a wind turbine rotor blade is disclosed which comprises a half shell. The half shell comprises a first spar cap, a second spar cap and a third spar cap. The second spar cap is arranged between the first spar cap and the third spar cap. The third spar cap is arranged at an outermost trailing edge. Core elements are arranged between the first spar cap and the second spar cap and/or the second spar cap and the third spar cap and/or the first and the third spar cap. At least one of the core elements is a tolerance compensation element comprising a wedge-formed portion interacting in a form-fit manner with a corresponding counter wedge-formed portion.

The wind turbine rotor blade enables the above-mentioned functions and advantages. The above-described embodiments with respect to the first aspect analogously apply to the wind turbine rotor blade.

Further advantages, features and functions, which are explained in connection with the figures, are given in the following exemplary embodiment of the invention. Identical, similar or similarly acting elements are provided with the same reference signs in the figures.

In the figures:
Figure 1 shows a schematic view of a wind turbine,
Figure 2 shows a schematic view of a rotor blade,
Figure 3 shows a schematic view of a cross-section of the wind turbine rotor blade,
Figure 4 shows a schematic flow chart of a method according to an embodiment of the invention,
Figures 5 and 6 schematically show different steps of the method,
Figure 7 schematically shows a tolerance compensation according to an embodiment of the invention, and
Figures 8 to 10 shows different tolerance compensation configurations according to embodiments of the invention.

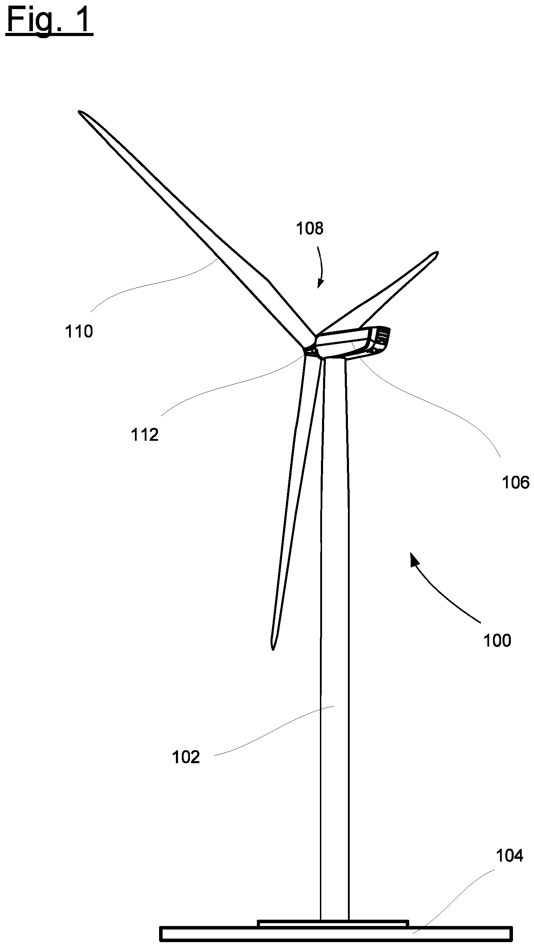

Figure 1 shows a schematic view of a wind turbine 100, which comprises a tower 102. The tower 102 is fixed to the ground by means of a foundation 104. At one end of the tower 102 opposite to the ground a nacelle 106 is rotatably mounted. The nacelle 106, for example, comprises a generator which is coupled to a rotor 108 via a rotor shaft (not shown). The rotor 108 comprises one or more (wind turbine) rotor blades 110, which are arranged on a rotor hub 112.

During operation, the rotor 108 is set in rotation by an air flow, for example wind. This rotational movement is transmitted to the generator via the rotor shaft and, if necessary, a gearbox. The generator converts the mechanical energy of the rotor 108 into electrical energy.

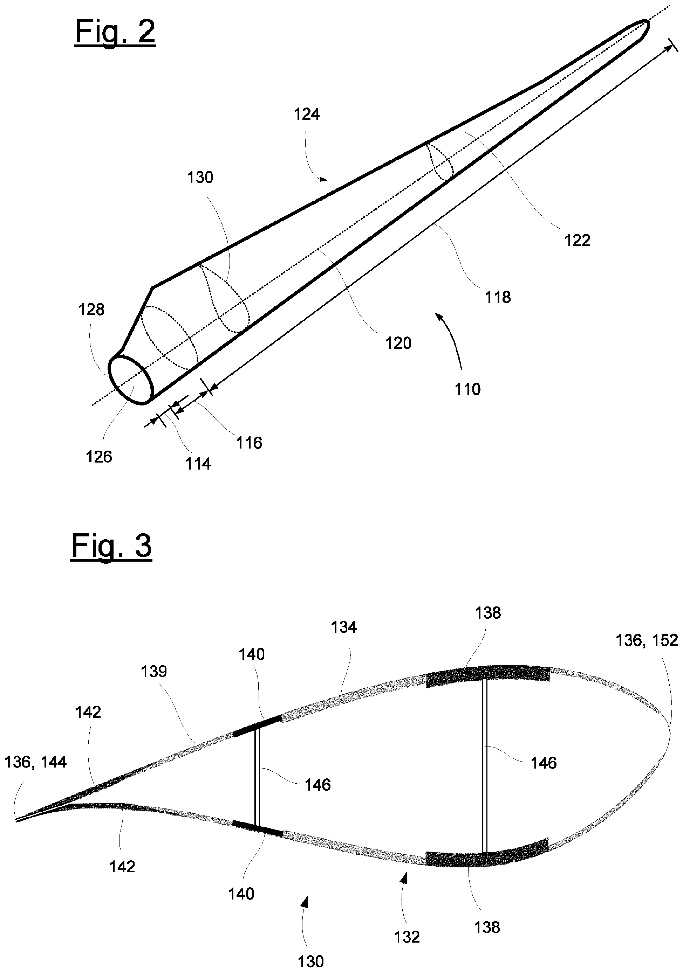

Figure 2 shows an exemplary rotor blade 110. The rotor blade 110 has the shape of a conventional rotor blade and has a rotor blade root area 114 facing the rotor hub 112. The rotor blade root area 114 typically has an essentially circular cross-section. The rotor blade root area 114 is followed by a transition area 116 and a profile area 118 of the rotor blade 110. The rotor blade 110 has a pressure side 122 and an opposite suction side 124 with respect to a longitudinal direction 120 (also main extension direction). The rotor blade 110 is essentially hollow inside.

In the rotor blade root area 114 a rotor blade root end 126 with a flange connection 128 is provided, by means of which the rotor blade 110 can be mechanically connected to a pitch bearing or an extender. The rotor blade 110 can be a segmented rotor blade.

Figure 3 shows a schematic cross section profile 130 (see figure 2) of the wind turbine rotor blade 110 running traverse to the longitudinal direction 120. The rotor blade 110 comprises a shell 132, which is comprised by two half-shells 134, wherein one half-shell 134 corresponds to the pressure side 122 and the other one to the suction side 124. The two half-shells 134 are firmly connected to each other along the longitudinal axis at opposite connecting regions 136. Each half-shell 134 has, in the present example, three spar caps, a first spar cap 138, a second spar cap 140 and a third spar cap 142, which are embedded in the shell-structure. A spar cap 138 to 140 can also be generally named "main laminate" and carries main loads during operation of the rotor blade 110. The third spar caps 142 run along the trailing edge 144 of the wind turbine rotor blade 110. The rotor blade 110 further comprises shear webs 144 connecting at least one pair of opposite spar caps 138 to 142.

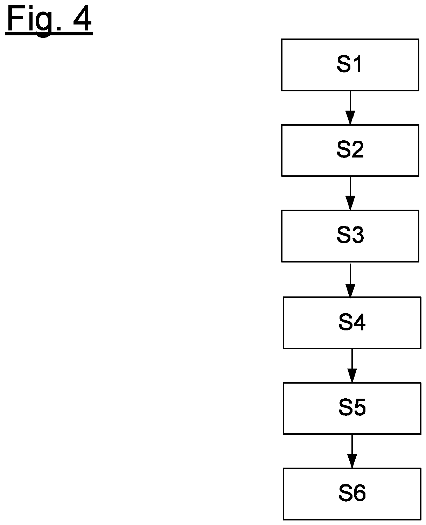

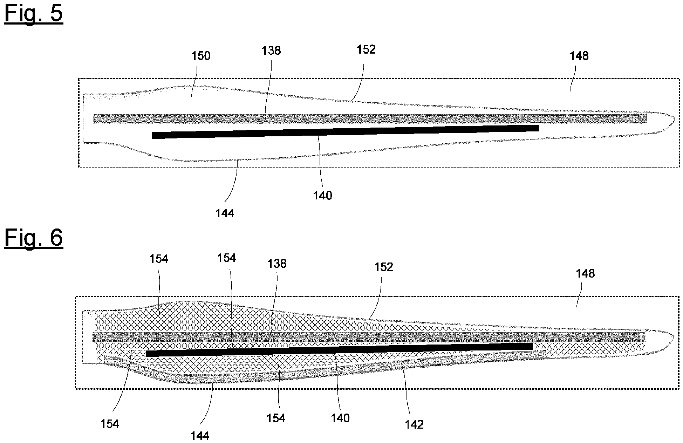

Regarding figure 4, a method for manufacturing a half shell 134 of the wind turbine rotor blade 110 according to an embodiment of the invention is described. Figures 5 and 6 schematically show different stages of the method.

In a first step S1, a mould 148 is provided. The mould 148 is designed for the manufacture of a rotor blade half-shell 134. Figure 5 schematically shows the mould 148 in a top view.

In a second step S2, an outer shell laminate 150 is laid into the mould 148. The outer shell laminate 150 comprises several layers of fiber composite material, e.g. glass fiber layers.

In a third step S3, the first spar cap 138 is placed at a predetermined position onto the outer shell laminate 150 (see figure 5). The first spar cap 138 is arranged next to the leading edge 152 (see also figure 3).

In a fourth step S4, the second spar cap 140 is placed onto the outer shell laminate 150 (see figure 5).

In a fifth step S5, as shown in figure 6, the third spar cap 142 is laid onto the outer shell laminate 150. The second spar cap 140 is arranged between the first spar cap 138 and the third spar cap 142. The third spar cap 142 is positioned at the outermost trailing edge 144. The third spar cap 142 runs along the trailing edge 144.

In a sixth step S6, core elements 154, e.g. made of foamed plastic material, are place in between the spar caps 138 to 142. The core elements 154, also named core panels, have a plate-like structure and may be curved to follow the inner surface of the mould 148 and to match with the aerodynamic contour of the to-be-manufactured wind turbine rotor blade 110. These core elements 154 are placed in a form-fit manner adjacent to each other into the mould 148. In order to provide an ideal, homogeneous structure and thickness of the half-shell 134, at least the following condition must be met: there may not be any substantial gaps between core elements 154 and spar caps 138 to 142. For example, only gaps with 7 mm maximum are allowed. Further, the core elements 154 must not lay on top of each other, at least in partial regions, in order to avoid doubling up a thickness of the half-shell 134.

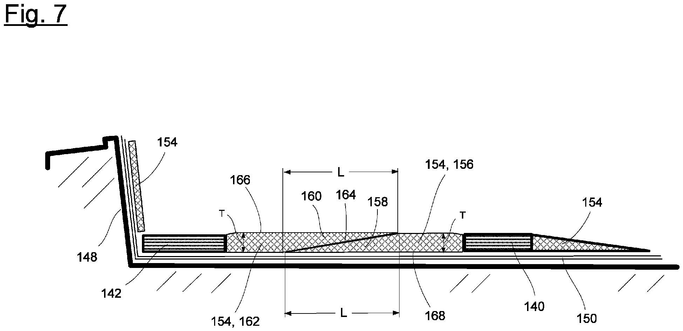

The spar caps and the core material panels are subject to predetermined tolerances, which lead to a tolerance chain. The position of the spar cap 138 is fixed to due structural reasons (e.g. a tolerance of only 2 cm is admissible) and the position of spar cap 142 is fixed due to its position at the trailing edge. The position of spar cap 140 is flexible in the allowed tolerances. That may result in that the core elements 154 may not perfectly fit into the mould 148 between the spar caps 140 and 142. Therefore, according to the invention, the core elements 154 located between the spar cap 140 and the spar cap 142 is a tolerance compensation element that comprises a wedge-formed portion and interacts in a form-fit manner with a corresponding counter wedge-formed portion. For the present example, this tolerance compensation is described alongside figures 7 to 10.

Figure 7 exemplarily shows a portion of the mould 148. In the mould 148, the outer shell laminate 150 is placed, on which the second and third spar cap 140, 142 is laid. Further, core elements 154 are placed in the mould 148. Between the shown two spar caps 140, 142 two core elements 154 are arranged. The one core element 154 next to the second spar cap 140 is the tolerance compensation element 156. The tolerance compensation element 156 comprises a wedge-formed portion 158. The wedge-formed portion 158 interacts with a counter wegde-formed portion 160 of an adjacent component. Here, the adjacent component is another core element 154, which could be seen as counter core element 162.

The wedge-formed portion 158 of the tolerance compensation element 156 and the counter wedge-formed portion 160 are in direct contact and form an inclined sliding plane 164. A ratio of a length L of the wedge-formed portion 158 of the tolerance compensation element 156 to a thickness T of the wedge-formed portion 158 of the tolerance compensation element 156 is at least 5:1 or more. The same applies to the counter wedge-formed portion 160. Thus, the length to thickness ratio of the wedge-formed portion 158 of the tolerance compensation element 156 corresponds to the length to thickness ratio of the counter wedge-formed portion 160. Furthermore, the thickness T of the wedge-formed portion 158 corresponds to the thickness of the counter wedge-formed portion 160.

By this configuration, the two core elements 156 and 162 can slightly slide relative to each other along the sliding plane 164 in order to provide a tolerance compensation during the layup of the components into the mould 148. Depending on the tolerance compensation, the wedge-formed portions 158, 160 may set back from each other with respect to a flush arrangement on the top side 166 and the bottom side 168, or the two wedge-formed portions 158, 160 project beyond each other on the top side 166 and the bottom side 168. In any case, the two wedge-formed portions 158, 160 are flush with each other on a top side and a bottom side, at least later in the manufacturing process after a step of vacuum resin infusion of the half-shell 134.

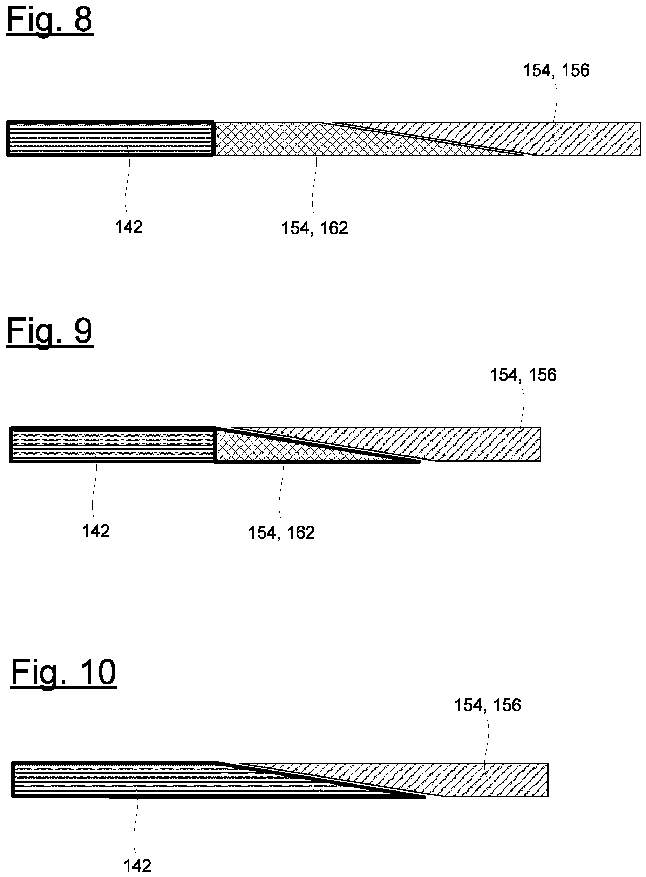

Figures 8 to 10 refer to three different constructional options for the tolerance compensation. Figure 8 schematically shows a configuration in which the counter wedge-formed portion 160 is part of a separate counter core element 162, the counter core element 162 being arranged between the tolerance compensation element 156 and a respective spar cap, here the third spar cap 142. This configuration is shown in figure 7 and allows, for example, to place the sliding plane 164 at any position between the two spar caps 140, 142, e.g. in the middle.

Figure 9 schematically shows a configuration, in which the counter core element 162 is integrally formed with the respective third spar cap 142.

Figure 10 schematically shows a configuration, in which a respective spar cap, here the third spar cap 142, is shaped as the counter wedge-formed portion 160, which faces an adjacent spar cap, here the second spar cap 140.

It is noted that the sliding plane 164 can be formed eighter in the direction as shown in figure 7 or in the direction as shown in figures 8 to 10.

As already indicated, after the positioning the of the core elements 154 and spar caps 138 to 142 as described above, subsequent steps follow to finally produce a wind turbine rotor blade 110.

### Reference signs

- 100: wind turbine
- 102: tower
- 104: foundation
- 106: nacelle
- 108: rotor
- 110: rotor blade
- 112: rotor hub
- 114: rotor blade root region
- 116: transition region
- 118: profile region
- 120: longitudinal direction
- 122: pressure side
- 124: suction side
- 126: rotor blade root end
- 128: flange connection
- 130: cross section profile
- 132: shell
- 134: half-shell
- 136: connecting regions
- 138: first spar cap
- 140: second spar cap
- 142: third spar cap
- 144: trailing edge
- 146: shear web
- 148: mould
- 150: outer shell laminate
- 152: leading edge
- 154: core element
- 156: tolerance compensation element
- 158: wedge-formed portion
- 160: counter wedge-formed portion
- 162: counter core element
- 164: sliding plane
- 166: top side
- 168: bottom side
- L: length
- T: thickness
- S1 - S5: steps

## Claims

1. Method of manufacturing a half shell (134) of a wind turbine rotor blade (110), the method comprising the steps:
- providing a mould (148),
- arranging an outer shell laminate (150) into the mould (148),
- arranging a first spar cap (138) onto the outer shell laminate (150),
- arranging a second spar cap (140) onto the outer shell laminate (150),
- arranging a third spar cap (142) onto the outer shell laminate (150), wherein
-- the second spar cap (140) is arranged between the first spar cap (138) and the third spar cap (142),
-- the third spar cap (142) is positioned at an outermost trailing edge (144), and
core elements (154) are arranged between the first spar cap (138) and the second spar cap (140) and/or between the second spar cap (140) and the third spar cap (142) and/or between the first spar cap (138) and the third spar cap (142), wherein at least one of the core elements (154) is a tolerance compensation element (156) that comprises a wedge-formed portion (158) and interacts in a form-fit manner with a corresponding counter wedge-formed portion (160).

2. Method according to claim 1, wherein the wedge-formed portion (158) of the tolerance compensation element (156) and the counter wedge-formed portion (160) are in contact and form an inclined sliding plane (164).

3. Method according to claim 1 or 2, wherein a ratio of a length (L) of the wedge-formed portion (158) of the tolerance compensation element (156) to a thickness (T) of the wedge-formed portion of the tolerance compensation element (156) is at least 5:1 or more.

4. Method according to any of the preceding claims, wherein a ratio of a length (L) of the counter wedge-formed portion (160) to a thickness (T) of the counter wedge-formed portion (160) is at least 5:1 or more.

5. Method according to claim 4, wherein the length to thickness ratio of the wedge-formed portion (158) of the tolerance compensation element (156) corresponds to the length to thickness ratio of the counter wedge-formed portion (160) .

6. Method according to any of the preceding claims, wherein the counter wedge-formed portion (160) has a thickness (T) which corresponds to the thickness (T) of the wedge-formed portion (158) of the tolerance compensation element (156).

7. Method according to any of the preceding claims, wherein, after a step of vacuum resin infusion of the half-shell (134), the wedge-formed portion (158) and the counter wedge-formed portion (160) are flush with each other on a top side (166) and a bottom side (168).

8. Method according to any one of claims 1 to 6, wherein the two wedge-formed portions (158, 160) project beyond each other on a top side (166) and a bottom side (168).

9. Method according to any one of claims 1 to 6, wherein the two wedge-formed portions (158, 160) are set back from each other with respect to a flush arrangement on a top side (166) and a bottom side (168).

10. Method according to any of the preceding claims, wherein the counter wedge-formed portion (160) is part of a separate counter core element (162), the counter core element (162) being arranged between the tolerance compensation element (156) and a respective spar cap (138, 140, 142).

11. Method according to any one of claims 1 to 9, wherein the counter wedge-formed portion (160) is part of a counter core element (162), the counter core element (162) being integrally formed with a respective spar cap (138, 140, 142).

12. Method according to any one of claims 1 to 9, wherein one of the spar caps (138, 140, 142) is shaped as the counter wedge-formed portion (160), which faces an adjacent spar cap (138, 140, 142).

13. Wind turbine rotor blade (110), comprising a half shell (134), wherein
- the half shell (134) comprises a first spar cap (138), a second spar cap (140) and a third spar cap (142),
- the second spar cap (140) is arranged between the first spar cap (138) and the third spar cap (142),
- the third spar cap (142) is arranged at an outermost trailing edge (144), and
- core elements (154) are arranged between the first spar cap (138) and the second spar cap (140) and/or the second spar cap (140) and the third spar cap (142) and/or the first and the third spar cap (138, 142), wherein at least one of the core elements (154) is a tolerance compensation element (156) comprising a wedge-formed portion (158) interacting in a form-fit manner with a corresponding counter wedge-formed portion (160).
